Europäisches Patentamt

European Patent Office

Office européen des brevets

(11) Publication number: **0 143 569**
A1

# EUROPEAN PATENT APPLICATION

(21) Application number: 84307584.7

(22) Date of filing: 02.11.84

(51) Int. Cl.⁴: **B 23 B 27/16**

(30) Priority: 02.11.83 GB 8329200

(43) Date of publication of application: 05.06.85
Bulletin 85/23

(84) Designated Contracting States: AT BE CH DE FR GB IT
LI NL SE

(71) Applicant: GENERAL ELECTRIC COMPANY, 1 River
Road, Schenectady New York 12305 (US)

(72) Inventor: Johnson, John Robert, 16 Birch Grove, Sandy
Bedfordshire SG19 1NG (GB)
Inventor: Hale, Alan Arthur, Byways Shooters Way Lane,
Berkhamsted Hertfordshire HP4 3NW (GB)

(74) Representative: Turner, Paul Malcolm et al, PAUL M.
TURNER AND COMPANY European Patent
Attorneys 47 Marylebone Lane, London W1M 6DL (GB)

(54) Holder assembly for an indexable insert for use in a cutting tool.

(57) A metal cutting tool 11 has an insert pocket 50 for a
ceramic insert 48, a clamp 10 is provided having a clamp stem
16 with a clamp arm 12 extending substantially perpendicular-
ly therefrom. In one embodiment a chip-breaker 32 having a
planar surface for abutting the planar surface 56 of the insert
48 is located by a means of a locating screw 34 and a clamp
finger 14 to the clamp arm 12. The clamp stem 16 has locating
lobes 18 (only one being shown) which are received in cor-
responding lobe pockets 28 and 30. The locating lobes 18 have
starting cones 19 for guidance of the locating lobes into the
pockets. The clamp 10 is held in position and provides a
clamping pressure on the cutting insert 46 by means of a twin-
threaded locking screw 20.

-1-

## HOLDER ASSEMBLY FOR AN INDEXABLE
INSERT FOR USE IN A CUTTING TOOL

The present invention relates to a holder assembly for an indexable insert for use in a metal cutting tool. More particularly, the invention relates to a holder assembly capable of clamping a ceramic cutting insert securely to the holder assembly. In particular, the present invention has a clamp arm mounted on a clamp stem which is securely located within a clamp hole such that forces applied to the ceramic cutting insert do not reduce the effectiveness of the clamp.

Cutting tools in the prior art, such as end mill cutting tools or rotatable milling tools, have been provided with indexable inserts to substantially increase the utility of the tool. More specifically, prior to the use of indexable inserts, the replaceable blades employed had only a single sharpened edge. To reduce manufacturing costs, an indexable insert, formed from tungsten carbide material, was developed having a plurality of sharpened cutting edges. In use, when a cutting edge becomes dull, the indexable insert is merely rotated such that a fresh sharpened edge is positioned to extend outwardly from the cutter in an active cutting position.

To maximize the number of cutting edges on a single insert, it is preferred that the insert be symmetrical in configuration to permit indexing and mounting of the insert in a variety of orientations. Thus, the prior art inserts may be square, circular, triangular, pentagonal, hexagonal or octagonal (multifaceted in configuration) so as to be readily indexed and mounted to expose a fresh sharpened cutting edge.

The tool-holders which were adapted to receive the indexable inserts of the prior art, were generally provided with pockets which include a platform area and one or more side walls. The indexable insert is inserted in one of the pockets and is orientated such that one of the planar surfaces thereof abuts the platform surface of the pocket of the cutter body. In addition, the side walls of the pocket are adapted to abut and brace one or more of the inactive sides of the inserts. By this arrangement, the side walls prevent the insert from rotating about its central axis during the use of the cutting tool. Preventing shifting or rotating of the insert during use is desired, such that desired axial and radial rake angles, as well as the lead angle of the cutting edge is maintained.

The cutting insert once positioned in the insert pocket, is clamped to hold it in position. The problem with present clamps is that they provide a local clamping force on the cutting insert which will not affect a tungsten carbide insert. However, local clamping forces can damage ceramic cutting inserts.

GB-A-946626 describes a tool holder having a holder assembly with a stem and clamp arm. The stem has a single lobe for location of the stem. However, the single lobe provides a point contact for the stem when the insert is in use and would allow movement of the stem. Even small movement of the clamp could cause a ceramic insert to fracture.

GB-A-1227315 describes a tool holder having a clamp for the insert. On the underface of the clamp are formed an abutment and locating projections. However, these projections do not serve to prevent rocking motion of the clamp stem.

GB-A-1345217 describes a cutting tool holder having a clamp with a leg to clamp the insert and a further leg to be received in a recess to locate the insert. The locating leg does not prevent rocking of the clamp when in use. In addition a point contact is provided when clamping the insert which would damage a ceramic insert.

GB-A-1483550 describes a cutting tool having a clamp which is only supported at three points i.e. at an extension and toe dogs engaging the insert. The clamping arrangement does not provide even pressure to a cutting insert and would cause damage to a ceramic insert.

GB-A-1570691 describes a cutting tool having a clamp which provides virtually point contact on the insert as well as point contact with a wedge point of the clamp. Once again this arrangement does not provide even cutting pressure to a cutting insert.

The use of ceramic cutting inserts has advantages in certain cutting applications, particularly cutting of alloys and cast iron. In these applications the tungsten carbide cutting inserts have been replaced by ceramic inserts. The ceramic inserts are more brittle and more easily shattered. By positioning a ceramic insert in a prior art cutting tool using conventional clamping means even small movement of the clamp can cause the insert to shatter or fracture.

The present invention attempts to provide a solution to this problem by providing a clamp which holds the cutting insert securely in the cutting pocket without damage to the insert.

The present invention also attempts to provide a clamping means which does not loosen during use.

According to the present invention, there is provided a holder assembly for an indexable insert which functions to restrict the unwanted rotational movement and unwanted rocking movement of the insert during the operation of the cutter in order to prevent damage to or shattering of a ceramic cutting insert.

The present invention provides a metal cutting tool having an elongated body and a holder assembly including a cutting insert, said holder assembly comprising a support member secured to said cutting tool, said support member including a platform and adjacent locating wall such that the platform and adjacent locating walls are capable of receiving a cutting insert, a clamp means capable of providing clamping pressure to a planar surface of the insert, the clamp means extending from a clamp stem having interlocking means with the support member, the clamp stem having at least two lobes engageable with the support member to prevent unwanted movement of the clamp stem during the use of the cutting tool.

A chip-breaking element is preferably provided. This has a planar surface capable of abutting a planar surface of the cutting insert when the chip-breaking element is used, the clamp means provides clamping pressure to a planar surface of the insert through the chip-breaking element.

The clamp may have a clamp arm extending generally perpendicularly from the clamp stem with a clamp finger which locates the chip-breaking element. The lobes on the clamp stem are preferably located on the opposite side of the clamp stem from which the clamp arm extends. The lobes may be partially cylindrical in shape, i.e. in cross-section describe a partial arc of a circle. The extremity of the lobes may have starting cones to generally ease the location of the lobes in the lobe pockets. The cones are a continuation of the lobes but of gradually reducing diameter until a point is reached.

-5-

The clamp stem is preferably cylindrical and preferably fits within a corresponding cylindrical aperture in the tool-holder.

The interlocking means which attaches the clamp stem to the support means and provides a clamping force on the clamping arm is preferably a conventional double-threaded locking screw which passes through a further aperture in the cutting stem.

The chip-breaking element is preferably constructed of tungsten carbide such that it has a greater toughness than the insert. It preferably has a planar surface which can be substantially the same area as the cutting insert to be used in the tool-holder. Thus, the chip-breaking element is substantially the same width as the cutting insert, such that an even and non-point force can be applied to the cutting insert to hold it in place in the pocket.

The clamp arm preferably provides clamping pressure through the chip-breaking element to the planar surface of the cutting insert. The clamp arm is preferably wide and has substantially the same width as both the chip-breaker and the insert to be used in the pocket.

On the clamp arm it is preferred that a clamp finger is provided which extends substantially across the width of the clamp arm. The clamp finger cooperates with a corresponding chip-breaking element. The chip-breaking valley may extend substantially across the width of the chip-breaking element, such that a firm pressure may be applied across the chip-breaking element. The chip-breaking element may have one or more chip-breaker locating valleys upon its surface such that different clamping positions may be arranged between the clamping arm and the ceramic insert.

It is preferred that the chip-breaking element may be attached to the clamping arm via the clamp finger and chip-breaker locating valley by means of a chip-breaker locating screw which passes up through the planar surface of the chip-breaker element.

If a chip-breaking element is not used, the clamp arm preferably extends into a broad clamp finger having a planar surface to abut the planar surface of the insert. The clamp finger thus has a large surface area to apply clamping pressure over as much surface area of the planar surface of the insert as is possible.

The present invention will be further described by way of example only, with reference to the accompanying drawings, in which:-

Figure 1 is a perspective view of the tool-holder of the present invention;

Figure 2 is a top view of the clamp aperture of the present invention; and

Figure 3 shows a view of the clamp finger.

The clamp 10 for a tool-holder 11 is provided. The clamp 10 has a clamp arm 12 with a clamp finger extending perpendicularly from the clamp arm. The clamp arm 12 extends perpendicularly from the clamp stem 16, which is generally cylindrical. Positioned on the clamp stem 16 are lobes 18 which extend from the generally cylindrical clamp stem 16 on the side opposed to the clamp arm 12. The lobes 18 describe an arc in cross-section and extend radially from the clamp stem 16. The lobes 18 run longitudinally along the clamp stem 16. Starting cones 19 are provided for the lobes.

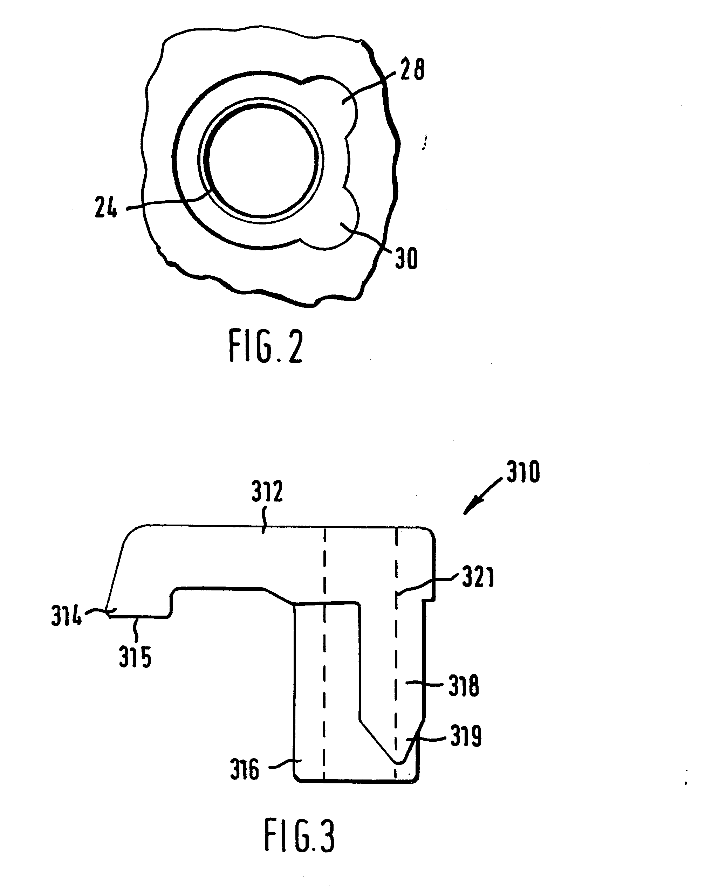

A double-ended screw 20 having an upper thread 21 locates the clamp stem 16 within a clamp aperture 22 having a screw thread 24 which mates with the screw thread 26 on the double threaded screw 20. As is more particularly shown in Figure 3, lobe pockets 28 are provided to receive the lobes 18 on the clamp stem 16. It is preferred that the lobe pockets 28 and 30 are partly circular in cross-section and extend from the wall of the clamp aperture 22 on one side of the clamp aperture 22 to receive the lobes 18 on the clamp stem 16.

It is preferred that the lobes 18 on the clamp stem 16 are on the opposite side to the clamp arm 12 and it is preferred that they are symmetrically arranged with respect to the clamp arm 12 to balance the forces transmitted from the cutting action through the clamp arm 12 to the clamp stem 16. The radius of each of the lobes 28 and 30 can vary but is preferably about half the radius of the clamp stem 16.

A chip-breaker 32 is provided. This may be of any suitable shape. A chip-breaker 32 can be attached to the clamp arm 12 by means of a chip-breaker locating screw 34 which passes through the chip-breaker 32 to a threaded chip-breaker locating screw hole 36 in the clamp arm 12. The chip-breaker 32 abuts with the clamp finger 14 by means of the chip-breaker locating valleys which extend across the chip-breaker 32. Two further chip-breaker locating valleys 40 and 42 are provided to allow adjustment for the chip-breaker 32 when in use and when the chip-breaker is in use. The chip-breaker 32 is reversible and has two chip-breaking edges 44 and 46, such that the chip-breaker may be turned round if damage occurs to it. This also means that the chip-breaker 32 is non-handed.

An insert 48, which may be a ceramic insert, is provided to sit within an insert pocket on a platform 42 which in turn is positioned on the pocket base 53. The planar surface 54 of the chip-breaker 32 abuts with the planar surface 56 of the cutting insert 48.

In order to provide an even clamping pressure on the planar surface 56 of the cutting insert 48, the planar surface 54 of the chip-breaker 32 is of substantially the same area as the planar surface

-8-

56 of the insert 48. Thus, the width of the chip-breaker 32 is substantially the same width as the width of the insert cross-section. In addition, the clamp arm 12 is of a width sufficient that the clamp finger 14 extends substantially across the width of the chip-breaker 32 within the chip-breaker locating valleys 38, 40 or 42.

In use, the platform 52 is normally retained in psotiion by a platform clamping screw 58 which passes through the pocket bas 53 of the tool-holder 11. The chip-breaker 32 is attached to the clamp arm 12 by means of the chip-breaker locating screw 34 such that the clamp finger 14 abuts with a valley 38 extending across the chip-breaker 32. An insert 48 is placed within the insert pocket 50 on the platform 52 and the double-ended screw 20 is threaded into the upper thread 21 of the clamping stem 16. The double-ended screw is then positioned within the lower thread 24 of the tool-holder 11 and is tightened.

The starting cones 19 for the lobes 18 allow the clamp stem 16 to be easily positioned in the correct orientation during the tightening process. The user whilst aligning the lobes 18 may allow the starting cones 19 to locate the lobe pockets 30. The starting cones 19 guide the lobes into proper location within the lobe pockets 30 to properly position the clamp stem 16 within the clamp aperture 22. Once alignment of the clamp stem 16 and lobes 18 has taken place, the double-ended screw is tightened to provide clamping pressure on the planar surface 56 of the insert 48.

Because the lobes 18 are located behind the pocket, they allow stronger pocket within the tool-holder 11. The clamp aperture 22 is contained within the tool-holder 11 without requiring a break in the side wall as in prior art tools. The lobes also provide positive location of the clamp.

The chip-breaker 32 has a flat contact plate base 54. The chip-breaker 32 is preferably made of carbide in order that it is protected from excessive wear when in use. The flat base 56 of the chip-breaker 32 allows good contact with the insert 48. The chip-breaker locating valleys form serations which extend across the width of the chip-breaker allowing clamping pressure via the clamp finger 14 across the hole of the chip-breaker which in turn has a large surface area to clamp the insert 48. The use of the lobes 18 allows positive location of the clamp stem 16 and prevents twisting of the clamp 10. The leading edge of the chip-breaker 32 is provided above the cutting portion of the insert 48 to deflect and break chips during the cutting operation.

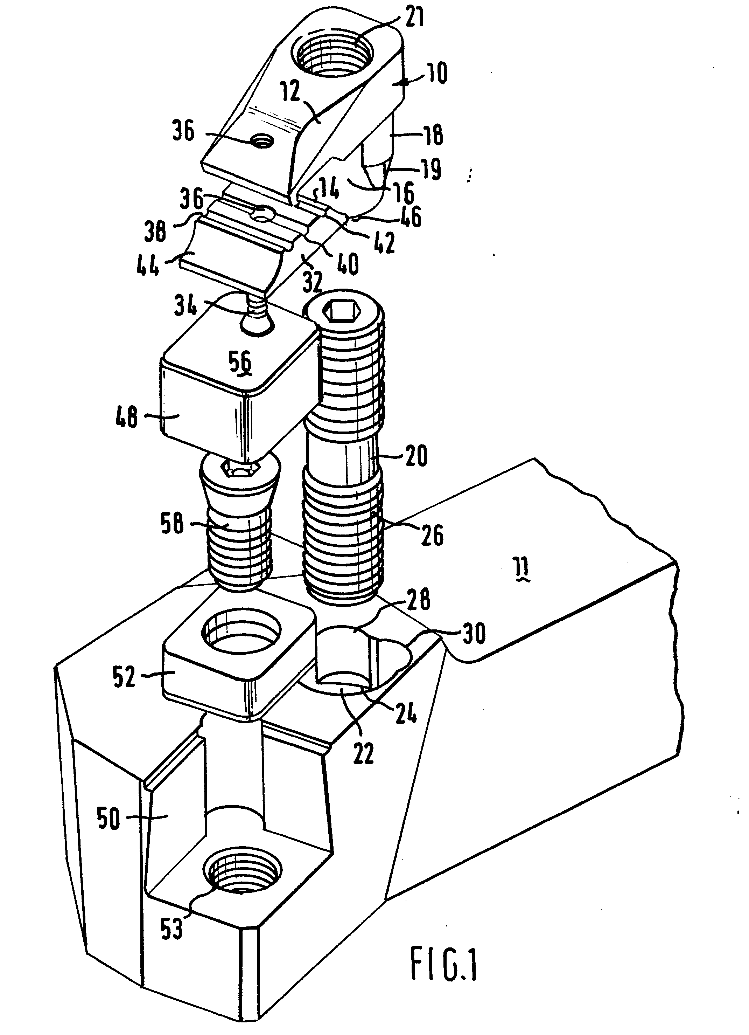

Figure 3 shows an embodiment of the present invention in which the clamp finger 314 clamps the insert directly into the insert pocket. In this embodiment the clamp 310 has a clamp arm 312 extending substantially perpendicularly therefrom. A clamp stem 316 has lobes 318 thereon with starting cones 319. An upper three 321 (shown by dashed lines) passes through the clamp stem 316. In use, the clamp 310 would replace the clamp 10, the chip-breaker 32 and the chip-breaking locating screw 34 (as shown in Figure 1). The clamp finger 314 has a large surface area 315 which is planar and extends across the width of the clamp finger to spread the clamp forces over the planar surface 56 of the insert (as shown in Figure 1).

CLAIMS

1. A metal cutting tool having an elongated body and a holder assembly including a cutting insert, said holder assembly comprising a support member secured to said cutting tool, said support member including a platform and an adjacent locating wall such that the platform and the adjacent locating walls are capable of receiving a cutting insert, a clamp means capable of providing clamping pressure to a planar surface of the insert, the clamp means extending from a clamp stem having interlocking means with the support member, characterised in that the clamp stem has at least two lobes thereon engageable with the support member to prevent unwanted movement of the clamp stem during use of the cutting tool.

2. A cutting tool as claimed in claim 1, characterised in that a chip-breaking element is provided, the chip-breaking element having a planar surface capable of abutting a planar surface of the cutting insert such that the clamp means provides clamp pressure to the planar surface of the insert through the chip-breaking element.

3. A metal cutting tool as claimed in claim 2, characterised in that the clamp means has a clamp stem and a clamp arm extending generally perpendicular from the clamp stem, and having a clamp finger on the clamp arm to locate the chip-breaking element in a clamping position.

4. A metal cutting tool as claimed in claim 2 or claim 3, characterised in that the chip-breaking element has a planar surface capable of abutting the planar surface of the insert and an opposing surface adapted to receive the clamp finger from the clamp stem.

5. A metal cutting tool as claimed in claim 1, characterised in that the clamp means has a clamp stem and a clamp arm extending perpendicularly therefrom, the clamp arm extending into a broad clamp finger with a planar surface capable of abutting the planar surface of the insert.

6.    A metal cutting tool as claimed in any one of the preceding claims, characterised in that two lobes are provided extending substantially parallel to the longitudinal axis of the stem.

7.    A metal cutting tool as claimed in any one of the preceding claims, characterised in that the lobes extend from the clamp stem and in cross-section describe a partial arc to be received in corresponding pockets in the tool body.

8.    A metal cutting tool as claimed in claim 7, characterised in that the extremity of the lobes has starting cones which increase in diameter from a point to the diameter of the partial arc to ease the location of the lobes in the lobe pockets.

FIG.1

FIG.2

FIG.3

**European Patent Office**

# EUROPEAN SEARCH REPORT

Application number

| | DOCUMENTS CONSIDERED TO BE RELEVANT | | EP 84307584.7 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | <u>AT - B - 255 862</u> (BETEILIGUNGS-...) | 1 | B 23 B 27/16 |
| A | * Totality * | 2-5 | |
| | -- | | |
| A | <u>GB - A - 1 095 261</u> (CINTRIDE) | 1-5 | |
| | * Fig. 1-18 * | | |
| | -- | | |
| A | <u>US - A - 3 331 116</u> (FÜSSENHÄUSER) | 1 | |
| | * Fig. 1-3 * | | |
| | -- | | |
| A | <u>DE - A - 2 023 648</u> (BÖHLER) | 1 | |
| | * Totality * | | |
| | ---- | | |
| | | | **TECHNICAL FIELDS SEARCHED (Int. Cl.4)** |
| | | | B 23 B 27/00 |
| | | | B 23 C  5/00 |

The present search report has been drawn up for all claims

| Place of search | Date of completion of the search | Examiner |
|---|---|---|
| VIENNA | 21-01-1985 | FUCHS |